# EUROPEAN PATENT SPECIFICATION

(11) **EP 0 927 100 B1**
(45) Date of publication and mention of the grant of the patent: **28.11.2001**
(21) Application number: 96933042.2
(22) Date of filing: 18.09.1996
(51) Int. Cl.: B29D 30/20

(54) **METHOD AND APPARATUS FOR SIMULTANEOUSLY ASSEMBLING A PLURALITY OF TYRES**
VERFAHREN UND GERÄT ZUM GLEICHZEITIGEN ZUSAMMENSETZEN EINER VIELZAHL VON REIFEN
PROCEDE ET APPAREIL PERMETTANT L'ASSEMBLAGE SIMULTANE D'UNE PLURALITE DE PNEUS

(43) Date of publication of application: 07.07.1999
(73) Proprietor: THE GOODYEAR TIRE & RUBBER COMPANY, Akron, Ohio 44316-0001 (US)
(72) Inventor: STOKES, James, Dale, Akron, OH 44333 (US); BEER, Klaus, Stow, OH 44224 (US); CONGER, Kenneth, Dean, Stow, OH 44224 (US); LUNDELL, Dennis, Alan, North Canton, OH 44720 (US); RING, Ralph, Damon, Akron, OH 44319 (US); ROMAN, John, Patrick, Cuyahoga Falls, OH 44223 (US)
(74) Representative: Leitz, Paul
(86) International application number: US9614942
(87) International publication number: WO9812043

(56) References cited:
- EP-A- 0 026 315
- EP-A- 0 167 224
- EP-A- 0 246 497
- GB-A- 1 141 620
- US-A- 2 407 152
- US-A- 4 105 487

## Description

### Technical Field

This invention pertains to the art of methods and apparatuses for assembling tires, and more specifically to methods and apparatuses for simultaneously and sequentially assembling a plurality of tires.

### Background Art

In the past, machines to build tires have included combinations of drums for forming tire carcasses and transfer units for transferring partially built tire carcasses from drum to drum. One such tire building apparatus is disclosed in US-A- 5,141,587 to Sumiuchi et al. Sumiuchi utilizes three drums for forming green partially built carcasses and transfer units that slide along guide rails for transferring the partially built carcasses from one drum to another. At any given time, tire components can be applied to the partially built carcasses of three tires.

Applicants recognized the need to increase the efficiency and production of tire building apparatuses. Applicants utilize a number of rotating turrets to successionally move tire forming drums from component applicator to component applicator without having to transfer a partially formed tire carcass from a drum more than once, thereby reducing the time to produce tires while providing tire uniformity and production efficiency. The present invention contemplates a new and improved tire building apparatus and method which is simple in design, effective in use, and overcomes the foregoing difficulties and others while providing better and more advantageous overall results.

### Disclosure of Invention

In accordance with the present invention, a new and improved tire building apparatus and method is provided which increases tire building efficiency and uniformity while reducing production time.

According to one aspect of the present invention, there is provided a method of building a tire using a tire building apparatus having a first turret spaced from a second turret, a transfer unit positioned between the first turret and the second turret, the first turret having a first drum and a second drum, the second turret having a third drum and a fourth drum, a first station and a second station located at the first turret for positioning the first drum and the second drum adjacent tire component applicators, a third station and a fourth station located at the second turret for positioning the third drum and the fourth drum to receive a carcass band from the transfer unit and other tire components a third turret spaced from a second turret with a fifth drum and a sixth drum, a fifth station and a sixth station located at the third turret, a second transfer unit positioned between the third turret and the second turret characterized by:
(a) positioning the first drum in the first station,
(b) applying a first station tire component to the first drum,
(c) rotating the first turret to move the first drum to the second position,
(d) applying a tire component to the fifth drum at the fifth station,
(e) applying a second station tire component to the first drum to form a tire band,
(f) rotating the third turret to move the fifth drum at the fifth station,
(g) rotating the first turret to move the first drum and the tire band to the first station,
(h) applying another tire component to the fifth drum to provide a tread breaker package,
(i) transferring the tire band from the first drum to the third drum at the third station by the transfer unit and applying beads to the tire band,
(j) rotating the third turret to move the fifth drum to the fifth station,
(k) rotating the second turret to move the third drum to the fourth station,
(l) transferring the tread breaker package from the fifth station to the fourth station of the second turret by the second transfer unit,
(m) rotating the second turret to move the third drum from the fourth station to the third station, and
(n) removing the tire carcass from the third drum for transfer to storage or vulcanization facilities.

According to another aspect of the present invention, there is provided a tire building apparatus for assembling a plurality of associated tire components to form a tire carcass characterized by:
(a) a first turret, a second turret, and a third turret, the first turret rotating between a first station and a second station, the second turret rotating between a third station and a fourth station, and a third turret rotating between a fifth station and a sixth station.
(b) each of the turrets being rotatable about a generally horizontal axis, drum shafts, extending from each of the turrets in generally opposite directions, drums mounted on the drum shafts, the turrets and the drum shafts being in general alignment with one another along an axis extending between the turrets;
(c) tire component application means positioned adjacent the drums for applying the associated tire components to the drums to form a tire carcass band;
(d) tire component application means positioned adjacent the drums for applying the associated tire components to the drums to form a breaker and tread package;
(e) a first transfer unit located between the first and second turrets for transferring the tire carcass band from one of the drums of the first turret to one of the drums of the second turret;
(f) a second transfer unit located between the second and third turrets for transferring the breaker and tread package from one of the drums of the third turret to one of the drums of the second turret; and
(g) tire removal means for removing the tire carcass from the tire building apparatus.

One advantage of the present invention is that five tires may be assembled simultaneously.

Another advantage of the present invention is that a partially built carcass is transferred from one drum to another drum only once.

Another advantage of the present invention is that the tire building apparatus can produce a tire ready for vulcanization approximately every 35-40 seconds.

Another advantage is that the layout of the tire component applicators provides ready access for changing the applicators for building tires with different specifications and for servicing.

### Brief Description of Drawings

The invention may take physical form in certain parts and arrangement of parts, a preferred embodiment of which will be described in detail in this specification and illustrated in the accompanying drawings which form a part hereof and herein:
Figure 1 is a schematic plan view of a tire building apparatus;
Figure 2 is a front view of a transfer unit;
Figure 3 is a side view of the tire building apparatus showing the first step in tire building procedure;
Figure 4 is a side view of the tire building apparatus showing the second step in tire building procedure;
Figure 5 is a side view of the tire building apparatus showing the third step in tire building procedure;
Figure 6 is a side view of the tire building apparatus showing the fourth step in tire building procedure;
Figure 7 is a side view of the tire building apparatus showing the fifth step in tire building procedure;
Figure 8 is a side view of the tire building apparatus showing the sixth step in tire building procedure;
Figure 9 is a side view of the tire building apparatus showing the seventh step in the tire building procedure; and,
Figure 10 is a plan view of a modification including an injection molded tread pick-up apparatus for applying an injection molded tread to be used in conjunction with the present invention.

### Detailed Description of the Invention

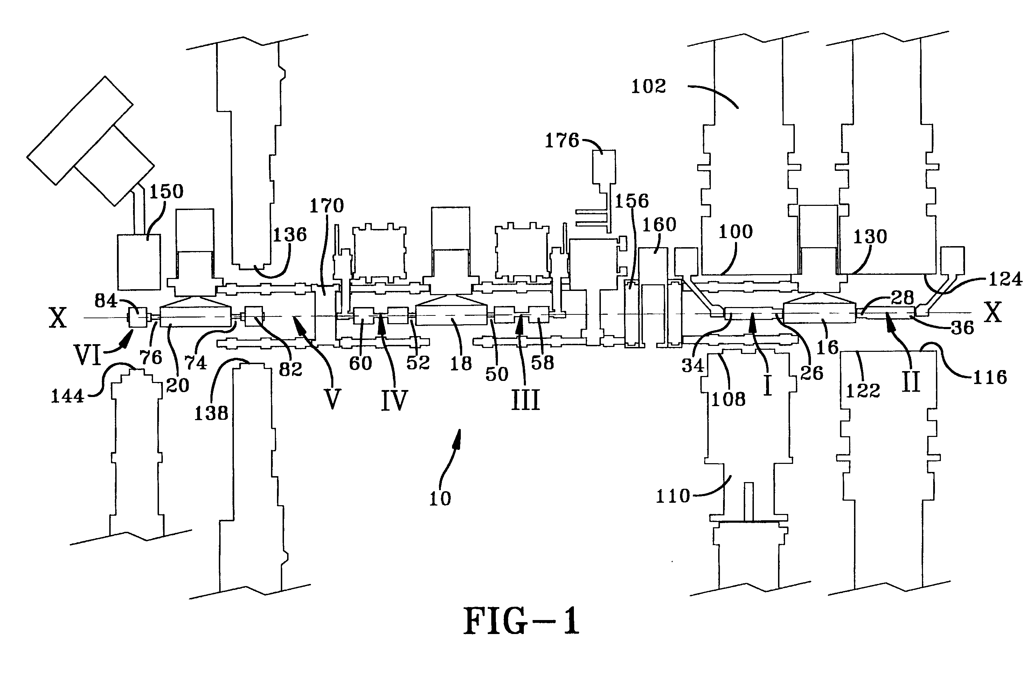

Referring now to the drawings wherein the showings are for purposes of illustrating a preferred embodiment of the invention only and not for purposes of limiting the same, Figure 1 shows a plan view of a tire building apparatus 10. The tire building apparatus 10 is designed to build a number of tires simultaneously in a step-by-step process. Preferably, the tire building apparatus 10 partially builds five tire carcasses simultaneously at peak performance.

The tire building apparatus 10 includes three turrets 16,18, 20. The first turret 16 has two drum shafts 26,28 that extend from the turret in generally opposite directions. Drums 34,36 are mounted on the ends of the drum shafts 26,28 of the first turret 16. The first turret 16 is rotatable in a manner such that drums 34,36 rotate between a first station I and a second station II. At an initial point of time, drum 34 is located at the first station I, while drum 36 is located at the second station II. When the first turret 16 rotates, drum 34 moves to the second station II and drum 36 moves to the first station I.

The second turret 18 has two drum shafts 50,52 that extend from the turret in generally opposite directions. Drums 58,60 are mounted on the ends of the drum shafts 50,52 of the second turret 18. The second turret 18 is rotatable in a manner such that drums 58,60 are moved between a third station III and a fourth station IV. At an initial point of time, drum 58 is located at the third station III, while drum 60 is located at the fourth station IV. When the second turret 18 rotates, drum 58 is moved to the fourth station IV and drum 60 is moved to the third station III. The first turret 16, the drum shafts 26,28 of the first turret, the second turret 18, and the drum shafts 50,52 of the second turret are preferably in general alignment with one another.

The third turret 20 has two drum shafts 74,76 that extend from the turret in generally opposite directions. Drums 82,84 are mounted on the ends of the drum shafts 74,76 of the third turret 20. The third turret 20 rotates in a manner such that drums 82,84 are moved between a fifth station V and a sixth station VI. At an initial point in time, drum 82 is located at the fifth station V, while drum 84 is located at the sixth station VI. When the third turret 20 rotates, drum 82 is moved to the sixth station VI and drum 84 is moved to the fifth station V. The third turret 20 and the drum shafts 74,76 of the third turret are preferably in a generally axial alignment with the first turret 16 and second turret 18.

At the first station I, there are means for applying a tire component to drums 34,36, such as a liner by an applicator 100 that is fed by a liner conveyor 102. The first station 1 also has a means for applying a tire component to drums 34,36, such as a sidewall by an applicator 108 that may be fed by a sidewall conveyor 110. In the preferred embodiment of the invention, the liner applicator 100 and the sidewall applicator 108 are positioned on opposite sides of the axis x-x. The liner applicator 100 first applies the liner to one of the drums 34,36, and then the sidewall applicator 108 applies the sidewalls.

At the second station II there is located toeguard applying means such as toeguard applicator 116 for applying a toeguard to the drums 34,36. Also, means for applying other tire components such as plies and a wedge to the drums, by a first ply applicator 122, a second ply applicator 124, and a wedge applicator 130 located at the second station 11. In the preferred embodiment of the invention, the toeguard applicator 116 and the first ply applicator 122 are on one side of the axis x-x, and the second ply applicator 124 and the wedge applicator 130 are on the opposite side of the axis. The toeguard is preferably applied first at the second station II, and then the first ply is applied. Thereafter, the second ply and the wedge are applied.

At the fifth station V there are located means for applying another tire component such as a breaker to the drums 82,84, by a first breaker applicator 136 and a second breaker applicator 138. In the preferred embodiment of the present invention, the first breaker applicator 136 is on one side of the axis x-x, and the second breaker applicator 138 is on the opposite side of the axis x-x. Preferably, the first breaker is applied to either of the drums 82,84 by the first breaker applicator 136, and then the second breaker is applied by the second breaker applicator 138.

At the sixth station VI there are located means for applying additional tire components such as a tread, by a tread applicator 144. At the sixth station VI there may also be located means for applying other tire components such as a spiral overlay, with a spiral overlay applicator 150 if high-performance tires are being produced by the tire building apparatus 10.

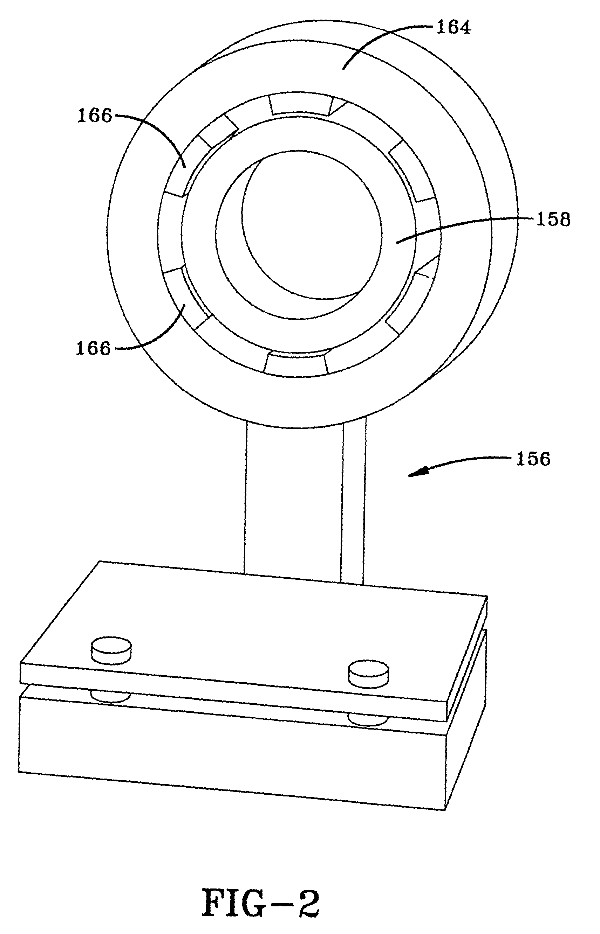

With reference to Figures 1 and 2, a first transfer unit 156 is located between the first turret 16 and the second turret 18. The first transfer unit 156 picks up the tire components after they are assembled in the form of a band 158 on one of the drums 34,36 at the first station I and second station II and transfers the band from the first station I to one of the drums 58,60 at the third station III. The first transfer unit 156 also contains a bead loading apparatus 160 for applying beads to the band 158 as the band is transferred from the first station I to the third station III. The first transfer unit 156 preferably has a cylindrical or substantially cylindrical support structure 164 fitted with radially movable shoes 166 that grip the band 158. The support structure 164 is moved axially of the apparatus 10 over one of the drums 34,36 and the movable shoes 166 are moved radially inward to grip the band 158. The first transfer unit 156 then transports the band 158 from one of the drums 34,36 to one of the waiting drums 58,60 at the third station III, where the support structure 164 surrounds the waiting drum and places the band over the drum. The band 158 is then released by the movable shoes 166, and the first transfer unit 156 moves away from the drum.

At the third station III, the band 158 is shaped on one of the drums 58,60 of the second turret 18 as the turret rotates the band to the fourth station IV.

A second transfer unit 170 is located between the second turret 18 and the third turret 20. The second transfer unit 170 is axially movable to transfer a complete breaker and tread package from the fifth station V and to place it around the band 158 waiting at the fourth station IV. The second transfer unit 170 preferably operates in the same manner as the first transfer unit 156 as shown in Figure 2.

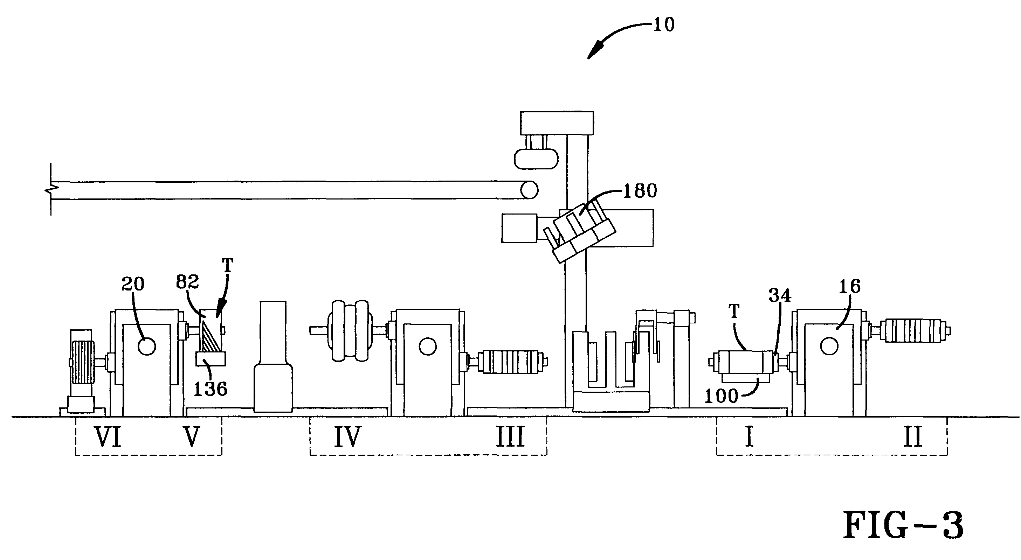

Although five tires may be built simultaneously on the tire building apparatus 10, Figures 3-9 follow the production of one tire on the tire building apparatus to illustrate the timing and steps involved in the process. Figure 3 shows the beginning step of tire construction on the tire building apparatus 10. First, the inner liner is applied at the first station I to the drum 34 by liner applicator 100. Then the sidewall is applied by sidewall applicator 108. Next, the sidewall is automatically spliced, or in some cases manually spliced by a worker. After the sidewall is spliced, the first turret 16 is rotated moving the drum 34 from the first station I to the second station II. At approximately the same time, the first breaker is applied to drum 82 at the fifth station V of of the third turret 20 by the first breaker applicator 136. Next, the second breaker is applied on top of the first breaker on drum 82 by the second breaker applicator 138. After the second breaker is applied, the third turret 20 is rotated, moving drum 82 from the fifth station V to the sixth station VI.

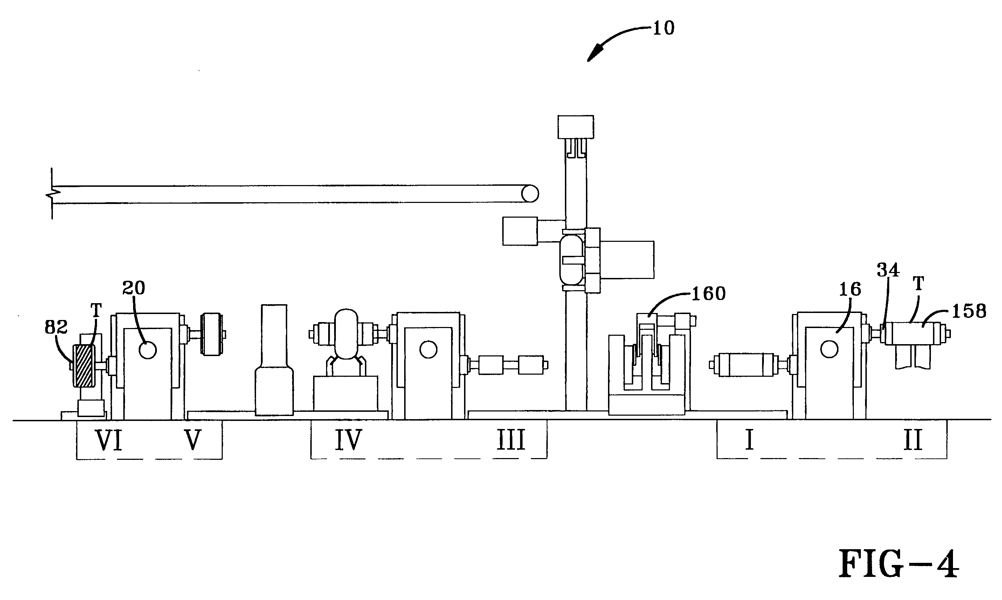

Figure 4 shows the tire building apparatus 10 with drum 34 rotated to the second station II and drum 82 rotated to the sixth station VI. At the second station II, the liner is stitched. After the stitching of the liner, the toeguard is then applied by the toeguard applicator 116. The first ply is then applied by the first ply applicator 122. The second ply is applied by the second ply applicator 124. Finally the wedge is applied by the wedge applicator 133. After the wedge is applied, the first turret 16 is rotated, moving the drum 34 with the band 158 comprised of liner, sidewall, toeguard, plies, and wedge back to the first station I to await transfer to the third station III. The drum 34 may be expanded before or after application of any component to place the component in tension and remove trapped air. At the sixth station VI, the spiral overlay may be applied by the spiral overlay applicator 150 on top of the breakers if required, or the drum 82 may sit idle for a period of time until a trcad is applied on top of the breakers. The tread is then applied by the tread applicator 144, and then the tread is manually spliced if required. The third turret 20 is then rotated, moving drum 82 back to the fifth station V to await transfer to the fourth station IV.

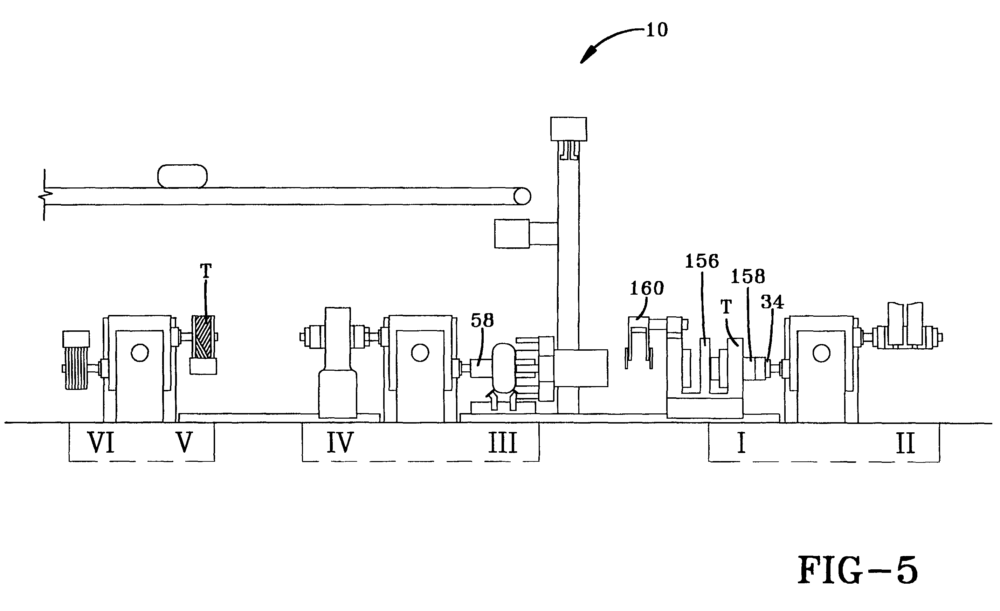

Figure 5 shows the first transfer unit 156 moved into position to remove the band 158 from the drum 34 and move it to the drum 58 at the third station III. Beads may he applied to the band 158 at the first station 1 or at the third station III by a bead loading apparatus 160 connected to the first transfer unit 156.

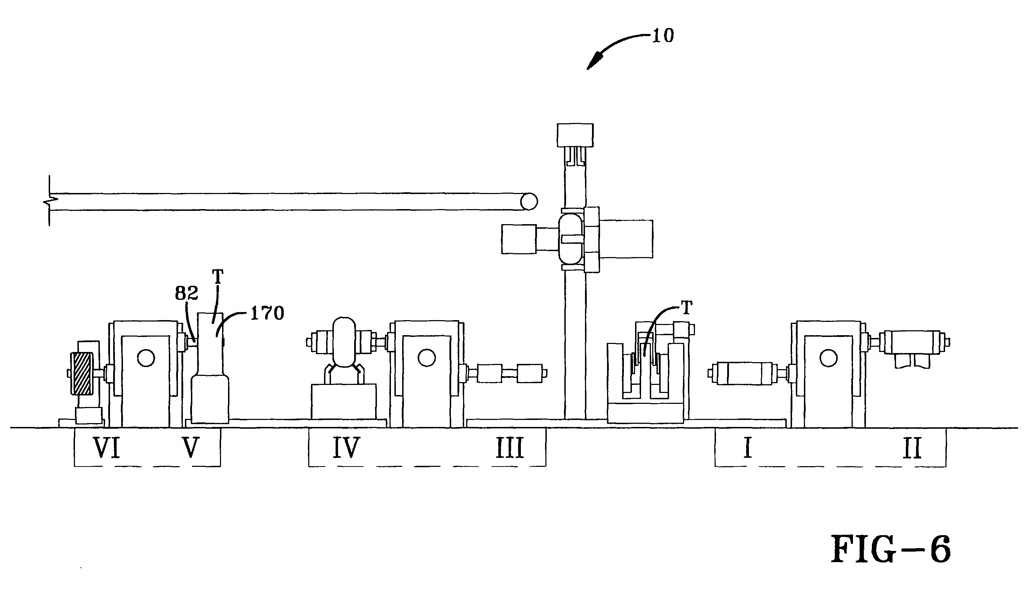

Figure 6 shows the next step of the production of a tire carcass as the second transfer unit 170 is moved into position to pick up the breaker and tread package from drum 82 at the fifth station V.

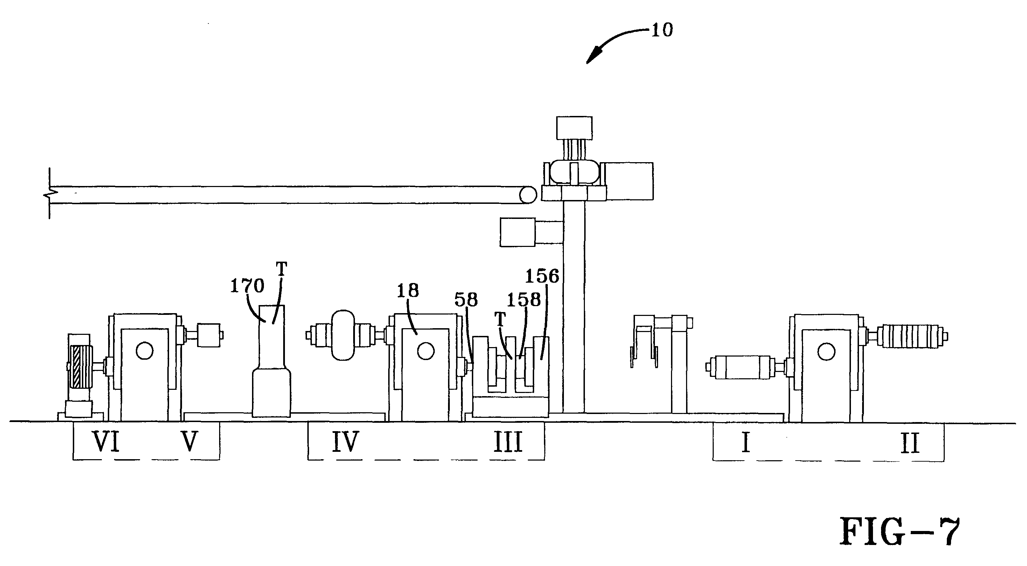

Figure 7 shows the first transfer unit 156 in position to place the band 158 on the drum 58 at the third station III. After the hand 158 is transferred to the drum 58 at the third station III, the second turret 18 is rotated, moving the drum 58 to the fourth station IV. As the second turret 18 is rotated, the drum 58 inflates to shape the band 158 and turns up part of the hand around the beads. Further turn-up may be required as the drum 58 remains at the fourth station IV awaiting the breaker and tread package to complete the shaping and turn-up. A stitching device of the type commonly used in the art then may be used to stitch the sidewall.

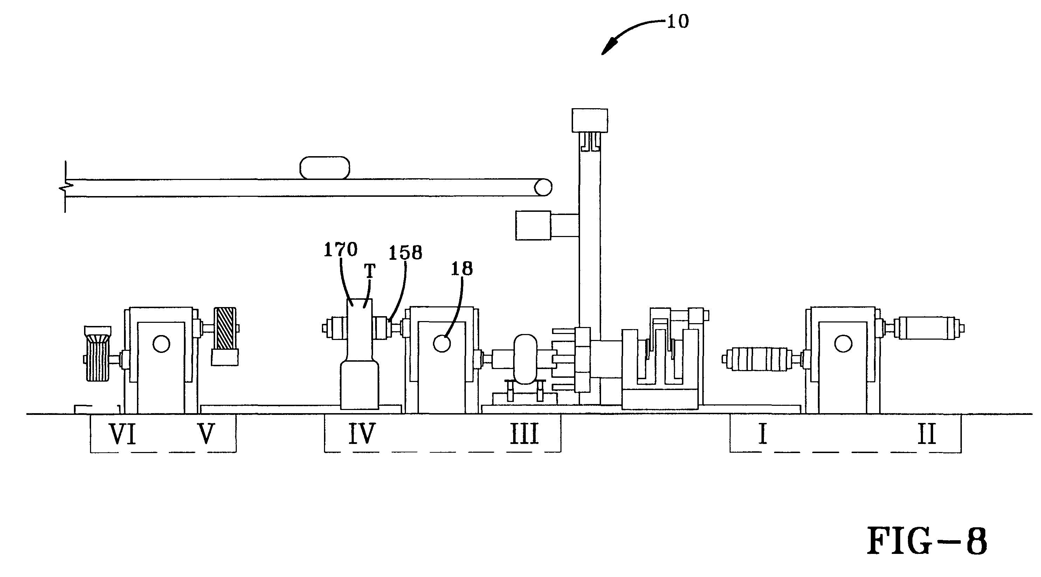

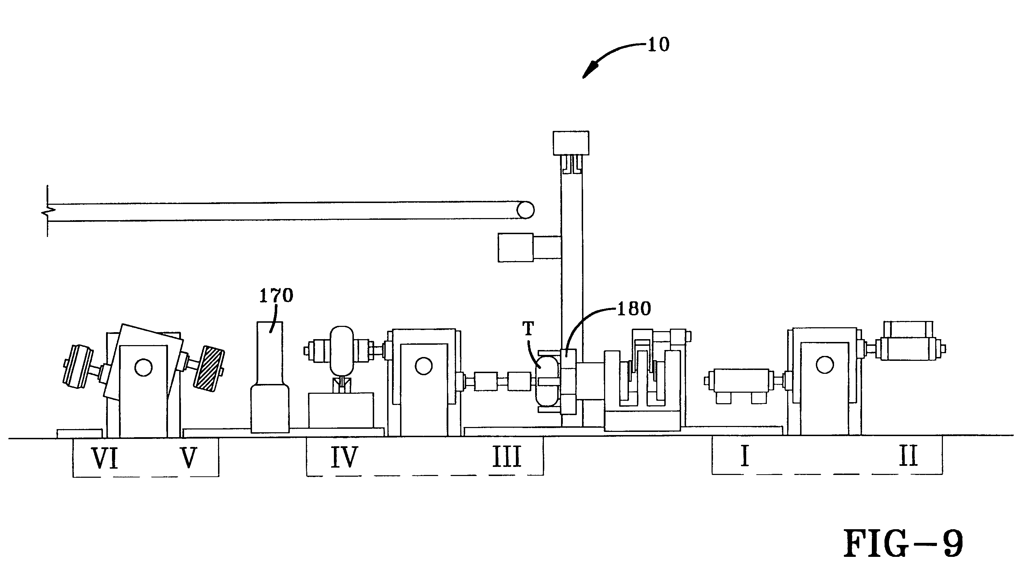

Figure 8 shows the second transfer unit 170 in position for placing the breaker and tread package onto the band 158 at the fourth station IV. The second turret 18 is then rotated, moving the drum 58 back to the third station III after the second transfer unit 170 moves back to a neutral position as shown in Figure 9. At the third station III, the breaker and tread package is stitched. The tire carcass, now ready to be vulcanized, is removed from the tire building apparatus 10 by a tire remover 180 at the third station III. A tire carcass is removed from the tire building apparatus 10 approximately once every 35-40 seconds.

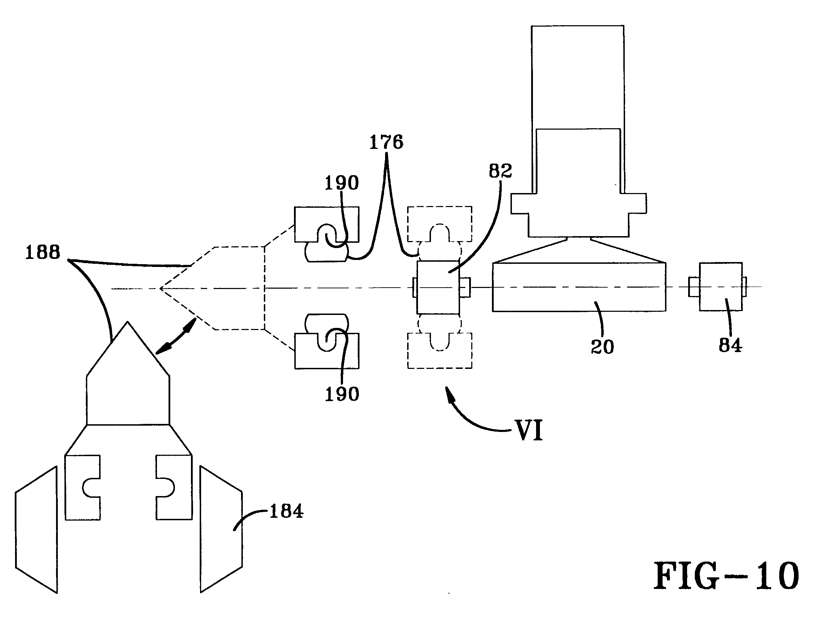

Figure 10 shows an alternate embodiment of the present invention where an injection molded tread is placed directly over the breaker at the sixth station VI. The injection molded tread either is removed from the injector body 184 directly by a pick-up apparatus 188 or is stored and then loaded onto the pick-up apparatus. The pick-up apparatus 188 may use a pick-up shoe to grasp the injection molded tread, or, as shown in Figure 10, the pick-up apparatus may have a vacuum ring 190 that grasps and holds the injection molded tread in place. The pick-up apparatus 188 then transfers the injection molded tread to the sixth station VI and places the tread onto the drum 82 holding the breakers. If the pick-up shoe is used in the pick-up apparatus 188, then the shoe simply releases the injection molded tread. If the vacuum ring 190 is used in the pick-up apparatus 188, then air in the vacuum ring is removed to create a vacuum that holds the injection molded tread in place, and the tread is removed by allowing air into the vacuum ring, thereby eliminating the vacuum and releasing the tread.

## Claims

1. A method of building a tire using a tire building apparatus (10) having a first turret (16) spaced from a second turret (18), a transfer unit (156) positioned between said first turret (16) and said second turret (18), said first turret (16) having a first drum (34) and a second drum (36), said second turret (18) having a third drum (58) and a fourth drum (60), a first station (I) and a second station (II) located at said first turret (16) for positioning said first drum (34) and said second drum (36) adjacent tire component applicators (122,124), a third station (III) and a fourth station (IV) located at said second turret (18) for positioning said third drum (58) and said fourth drum (60) to receive a carcass band from said transfer unit (156) and other tire components a third turret (20) spaced from a second turret (18) with a fifth drum (82) and a sixth drum (84), a fifth station (V) and a sixth station (VI) located at said third turret (20), a second transfer unit (170) positioned between said third turret (20) and said second turret (18) **characterized by**:
(a) positioning said first drum (34) in said first station (I),
(b) applying a first station (I) tire component to said first drum (34),
(c) rotating said first turret (16) to move said first drum (34) to said second position (II),
(d) applying a tire component to said fifth drum (82) at said fifth station (V),
(e) applying a second station (II) tire component to said first drum (34) to form a tire band (158),
(f) rotating said third turret (20) to move said fifth drum (82) at said sixth station (VI),
(g) rotating said first turret (16) to move said first drum (34) and said tire band (158) to said first station (I),
(h) applying another tire component to said fifth drum (82) to provide a tread breaker package,
(I) transferring said tire band (158) from said first drum (34) to said third drum (58) at said third station (III) by said transfer unit (156) and applying beads to said tire band (158),
(j) rotating said third turret (20) to move said fifth drum (82) to said fifth station (V),
(k) rotating said second turret (18) to move said third drum (58) to said fourth station (IV),
(l) transferring said tread breaker package from said fifth station (V) to said fourth station (IV) of said second turret (18) by said second transfer unit (170),
(m) rotating said second turret (18) to move said third drum (58) from said fourth station (IV) to said third station (III), and
(n) removing said tire carcass from said third drum (58) for transfer to storage or vulcanization facilities.

2. The method of claim 1 further **characterized by** said tire components being applied from both sides of said first drum (16) at said first station (I) and at said second station (II).

3. The method of claim 1 further **characterized by** said third drum (58) being expanded to shape said tire band.

4. The method of claim 1 further **characterized by** applying a second first station tire component to said first drum (34) in said first station (I).

5. The method of claim 4 further **characterized by** applying a second station tire component to said first drum (34) in said second station (II).

6. The method of claim 5 further **characterized by** applying said first station tire component and said second first station tire component from opposite sides of said first drum (34) in said first station (I).

7. The method of claim 5 further **characterized by** applying said first second station tire component and said second station tire component from opposite sides of said first drum (34) in said second station (II).

8. The method of claim 1 further **characterized by** said tire component applied to said fifth drum (82) at said sixth station (VI) being a tire tread.

9. The method of claim 8 wherein said tire tread is an injection molded tread (176) **characterized by** loading said tread in a pick up apparatus and transferring said tread (176) to said sixth station (VI) for application to said fifth drum (82).

10. The method of claim 8 wherein said tire tread is an injection molded tread **characterized by** removing said tread directly from an injector body by a pick up apparatus (188) and transferring said tread to a said sixth station (VI) for application to said fifth drum (82).

11. A tire building apparatus for assembling a plurality of associated tire components to form a tire carcass **characterized by**:
(a) a first turret (16), a second turret (18), and a third turret (20), said first turret (16) rotating between a first station (I) and a second station (II), said second turret (18) rotating between a third station (III) and a fourth station (IV), and a third turret (20) rotating between a fifth station (V) and a sixth station (VI).
(b) each of said turrets (18,19,20) being rotatable about a generally horizontal axis, drum shafts (26,28,50, 52,74,76) extending from each of said turrets in generally opposite directions, drums (34,36,58,60,82,84) mounted on said drum shafts (26,28,50,52,74,76), said turrets and said drum shafts being in general alignment with one another along an axis extending between said turrets (16,18,20);
(c) tire component application means positioned adjacent said drums (34,36) for applying said associated tire components to said drums to form a tire carcass band (158);
(d) tire component application means positioned adjacent said drums (82,84) for applying said associated tire components to said drums to form a breaker and tread package;
(e) a first transfer unit (156) located between said first and second turrets (16,18) for transferring said tire carcass band (158) from one of said drums (34,36) of said first turret (16) to one of said drums (58,60) of said second turret (18);
(f) a second transfer unit (170) located between said second and third turrets (18,20) for transferring said breaker and tread package from one of said drums (82,84) of said third turret (20) to one of said drums (58,60) of said second turret (18); and
(g) tire removal means (180) for removing said tire carcass from said tire building apparatus.

12. The tire building apparatus of claim 11 further **characterized by** said tire component application means comprising means for applying a sidewall and an inner liner to one of said drums (34,36) of said first turret (16) and means for applying a toeguard, a first ply, a second ply, and a wedge to one of said drums (34,36) of said first turret (16), said inner liner, said sidewall, said toeguard, said first ply, said second ply, and said wedge forming said tire carcass band (158).

13. The tire building apparatus of claim 12 further **characterized by** said tire component application means comprising means for applying beads to said tire carcass band (158).

14. The tire building apparatus of claim 11 further **characterized by** said tire component application means comprising means for applying an inner liner and a sidewall to one of said drums (34,36) at said first station (I) of said first turret (16) and means for applying a toeguard a first ply, a second ply, and a wedge to one of said drums (34,36) at second station (II) of said first turret (16), said inner liner, said sidewall, said toeguard, said first ply, said second ply, and said wedge forming said tire carcass band (158).

15. The tire building apparatus of claim 14 further **characterized by** means for applying beads to said tire carcass band.

16. The tire building apparatus of claim 15 further **characterized by** said tire component application means comprising means for applying a breaker to one of said drums (82,84) at said fifth station (V) of said third turret (20) and means for applying a tread to one of said drums (82,84) at said sixth station (VI) of said third turret (20).

17. The tire building apparatus of claim 16 further **characterized by** said tire component application means further comprising means for applying a spiral overlay to one of said drums (82,84) at said sixth station (VI) of said third turret (20).

## Patentansprüche

1. Verfahren für den Aufbau eines Reifens unter Verwendung einer Reifenaufbauvorrichtung (10) mit einem ersten Revolverkopf (16), der von einem zweiten Revolverkopf (18) beabstandet ist, einer Übertragungseinheit (156), die zwischen dem ersten Revolverkopf (16) und dem zweiten Revolverkopf (18) angeordnet ist, wobei der erste Revolverkopf (16) eine erste Trommel (34) und eine zweite Trommel (36) aufweist, der zweite Revolverkopf (18) eine dritte Trommel (58) und eine vierte Trommel (60) aufweist, einer ersten Station (I) und einer zweiten Station (II), die an dem ersten Revolverkopf (16) angeordnet sind, um die erste Trommel (34) und die zweite Trommel (36) neben den Reifenbauteil-Aufbringungsvorrichtungen (122, 124) zu positionieren, einer dritten Station (III) und einer vierten Station (IV), die an dem zweiten Revolverkopf (18) angeordnet sind, um die dritte Trommel (58) und die vierte Trommel (60) zur Aufnahme eines Karkassbandes von der Übertragungseinheit (156) und anderer Reifenbauteile zu positionieren, einen dritten Revolverkopf (20), der von einem zweiten Revolverkopf (18) beabstandet ist, mit einer fünften Trommel (82) und einer sechsten Trommel (84), einer fünften Station (V) und einer sechsten Station (VI), die an dem dritten Revolverkopf (20) angeordnet sind, einer zweiten Übertragungseinheit (170), die zwischen dem dritten Revolverkopf (20) und dem zweiten Revolverkopf (18) positioniert ist, **dadurch gekennzeichnet, daß**:
(a) die erste Trommel (34) in der ersten Station (I) positioniert wird,
(b) ein Reifenbauteil der ersten Station (I) auf die erste Trommel (34) aufgebracht wird,
(c) der erste Revolverkopf (16) gedreht wird, um die erste Trommel (34) zur zweiten Position (II) zu bewegen,
(d) ein Reifenbauteil auf die fünfte Trommel (82) an der fünften Station (V) aufgebracht wird,
(e) ein Reifenbauteil der zweiten Station (II) auf die erste Trommel (34) aufgebracht wird, um ein Reifenband (158) zu bilden,
(f) der dritte Revolverkopf (20) gedreht wird, um die fünfte Trommel (82) an die sechste Station (VI) zu bewegen,
(g) der erste Revolverkopf (16) gedreht wird, um die erste Trommel (34) und das Reifenband (158) zur ersten Station (I) zu bewegen,
(h) ein anderes Reifenbauteil auf die fünfte Trommel (82) aufgebracht wird, um ein Laufstreifen-Breaker-Paket bereitzustellen,
(i) das Reifenband (158) von der ersten Trommel (34) zur dritten Trommel (58) an der dritten Station (III) durch die Übertragungseinheit (156) übertragen wird und Wülste auf das Reifenband (158) aufgebracht werden,
(j) der dritte Revolverkopf (20) gedreht wird, um die fünfte Trommel (82) zur fünften Station (V) zu bewegen,
(k) der zweite Revolverkopf (18) gedreht wird, um die dritte Trommel (58) zur vierten Station (IV) zu bewegen,
(l) das Laufstreifen-Breaker-Paket von der fünften Station (V) zur vierten Station (IV) des zweiten Revolverkopfes (18) durch die zweite Übertragungseinheit (170) übertragen wird,
(m) der zweite Revolverkopf (18) gedreht wird, um die dritte Trommel (58) von der vierten Station (IV) zur dritten Station (III) zu bewegen, und
(n) die Reifenkarkasse von der dritten Trommel (58) zur Übertragung zu Speicher- oder Vulkanisationseinrichtungen abgenommen wird.

2. Verfahren nach Anspruch 1, ferner **dadurch gekennzeichnet, daß** die Reifenbauteile von beiden Seiten der ersten Trommel (16) an der ersten Station (I) und an der zweiten Station (II) aufgebracht werden.

3. Verfahren nach Anspruch 1, ferner **dadurch gekennzeichnet, daß** die dritte Trommel (58) ausgedehnt wird, um das Reifenband zu formen.

4. Verfahren nach Anspruch 1, ferner **dadurch gekennzeichnet, daß** ein zweites Reifenbauteil der ersten Station auf die erste Trommel (34) in der ersten Station (I) aufgebracht wird.

5. Verfahren nach Anspruch 4, ferner **dadurch gekennzeichnet, daß** ein Reifenbauteil der zweiten Station auf die erste Trommel (34) in der zweiten Station (II) aufgebracht wird.

6. Verfahren nach Anspruch 5, ferner **dadurch gekennzeichnet, daß** das Reifenbauteil der ersten Station und das zweite Reifenbauteil der ersten Station von entgegengesetzten Seiten der ersten Trommel (34) in der ersten Station (I) aufgebracht werden.

7. Verfahren nach Anspruch 5, ferner **dadurch gekennzeichnet, daß** das erste Reifenbauteil der zweiten Station und das Reifenbauteil der zweiten Station von entgegengesetzten Seiten der ersten Trommel (34) in der zweiten Station (II) aufgebracht werden.

8. Verfahren nach Anspruch 1, ferner **dadurch gekennzeichnet, daß** das Reifenbauteil, das auf die fünfte Trommel (82) an der sechsten Station (VI) aufgebracht wird, ein Reifenlaufstreifen ist.

9. Verfahren nach Anspruch 8, wobei der Reifenlaufstreifen ein spritzgegossener Laufstreifen (176) ist, **dadurch gekennzeichnet, daß** der Laufstreifen in eine Aufnahmevorrichtung geladen wird, und daß der Laufstreifen (176) zur sechsten Station (VI) zur Aufbringung auf die fünfte Trommel (82) übertragen wird.

10. Verfahren nach Anspruch 8, wobei der Reifenlaufstreifen ein spritzgegossener Laufstreifen ist, **dadurch gekennzeichnet, daß** der Laufstreifen von einem Spritzvorrichtungskörper direkt durch eine Aufnahmevorrichtung (188) abgenommen wird, und daß der Laufstreifen zur sechsten Station (VI) zur Aufbringung auf die fünfte Trommel (82) übertragen wird.

11. Reifenaufbauvorrichtung für den Zusammenbau einer Vielzahl von zugehörigen Reifenbauteilen, um eine Reifenkarkasse zu bilden, **gekennzeichnet durch**:
(a) einen ersten Revolverkopf (16), einen zweiten Revolverkopf (18) und einen dritten Revolverkopf (20), wobei der erste Revolverkopf (16) zwischen einer ersten Station (I) und einer zweiten Station (II) rotiert, der zweite Revolverkopf (18) zwischen einer dritten Station (III) und einer vierten Station (IV) rotiert, und ein dritter Revolverkopf (20) zwischen einer fünften Station (V) und einer sechsten Station (VI) rotiert,
(b) wobei jeder der Revolverköpfe (18, 19, 20) um eine im allgemeinen horizontale Achse drehbar ist, Trommelwellen (26, 28, 50, 52, 74, 76), die sich von jedem der Revolverköpfe in im allgemeinen entgegengesetzte Richtungen erstrecken, Trommeln (34, 36, 58, 60, 82, 84), die an den Trommelwellen (26, 28, 50, 52, 74, 76) montiert sind, wobei die Revolverköpfe und die Trommelwellen im allgemeinen miteinander entlang einer Achse ausgerichtet sind, die sich zwischen den Revolverköpfen (16, 18, 20) erstreckt,
(c) ein Reifenbauteil-Aufbringungsmittel, das neben den Trommeln (34, 36) angeordnet ist, um die zugehörigen Reifenbauteile auf die Trommeln aufzubringen und somit ein Reifenkarkassband (158) zu bilden,
(d) ein Reifenbauteil-Aufbringungsmittel, das neben den Trommeln (82, 84) angeordnet ist, um die zugehörigen Reifenbauteile auf die Trommeln aufzubringen und somit ein Breaker- und Laufstreifenpaket zu bilden,
(e) eine erste Übertragungseinheit (156), die zwischen den ersten und zweiten Revolverköpfen (16, 18) angeordnet ist, um das Reifenkarkassband (158) von einer der Trommeln (34, 36) des ersten Revolverkopfes (16) zu einer der Trommeln (58, 60) des zweiten Revolverkopfes (18) zu übertragen,
(f) eine zweite Übertragungseinheit (170), die zwischen den zweiten und dritten Revolverköpfen (18, 20) angeordnet ist, um das Breaker- und Laufstreifenpaket von einer der Trommeln (82, 84) des dritten Revolverkopfes (20) zu einer der Trommeln (58, 60) des zweiten Revolverkopfes (18) zu übertragen, und
(g) ein Reifenabnahmemittel (180), um die Reifenkarkasse von der Reifenaufbauvorrichtung abzunehmen.

12. Reifenaufbauvorrichtung nach Anspruch 11, ferner **dadurch gekennzeichnet, daß** das Reifenbauteil-Aufbringungsmittel ein Mittel zum Aufbringen einer Seitenwand und eines Innerliners auf eine der Trommeln (34, 36) des ersten Revolverkopfes (16) und ein Mittel zum Aufbringen eines Zehenschützers, einer ersten Lage, einer zweiten Lage und eines Keils auf eine der Trommeln (34, 36) des ersten Revolverkopfes (16) umfaßt, wobei der Innerliner, die Seitenwand, der Zehenschützer, die erste Lage, die zweite Lage und der Keil das Reifenkarkassband (158) bilden.

13. Reifenaufbauvorrichtung nach Anspruch 12, **dadurch gekennzeichnet, daß** das Reifenbauteil-Aufbringungsmittel ein Mittel zum Aufbringen von Wülsten auf das Reifenkarkassband (158) umfaßt.

14. Reifenaufbauvorrichtung nach Anspruch 11, ferner **dadurch gekennzeichnet, daß** das Reifenbauteil-Aufbringungsmittel ein Mittel zum Aufbringen eines Innerliners und einer Seitenwand auf eine der Trommeln (34, 36) an der ersten Station (I) des ersten Revolverkopfes (16) und ein Mittel zum Aufbringen eines Zehenschützers, einer ersten Lage, einer zweiten Lage und eines Keils auf eine der Trommeln (34, 36) an der zweiten Station (II) des ersten Revolverkopfes (16) umfaßt, wobei der Innerliner, die Seitenwand, der Zehenschützer, die erste Lage, die zweite Lage und der Keil das Reifenkarkassband (158) bilden.

15. Reifenaufbauvorrichtung nach Anspruch 14, ferner durch ein Mittel zum Aufbringen von Wülsten auf das Reifenkarkassband **gekennzeichnet.**

16. Reifenaufbauvorrichtung nach Anspruch 15, ferner **dadurch gekennzeichnet, daß** das Reifenbauteil-Aufbringungsmittel ein Mittel zum Aufbringen eines Breakers auf eine der Trommeln (82, 84) an der fünften Station (V) des dritten Revolverkopfes (20) und ein Mittel zum Aufbringen eines Laufstreifens auf eine der Trommeln (82, 84) an der sechsten Station (VI) des dritten Revolverkopfes (20) umfaßt.

17. Reifenaufbauvorrichtung nach Anspruch 16, ferner **dadurch gekennzeichnet, daß** das Reifenbauteil-Aufbringungsmittel ferner ein Mittel zum Aufbringen einer Spiralauflage auf eine der Trommeln (82, 84) an der sechsten Station (VI) des dritten Revolverkopfes (20) umfaßt.

## Revendications

1. Procédé de confection d'un bandage pneumatique en utilisant un appareil de confection de bandage pneumatique (10) possédant une première tourelle revolver (16) espacée d'une deuxième tourelle revolver (18), une unité de transfert (156) positionnée entre ladite première tourelle revolver (16) et ladite deuxième tourelle revolver (18), ladite première tourelle revolver (16) possédant un premier tambour (34) et un deuxième tambour (36), ladite deuxième tourelle revolver (18) possédant un troisième tambour (58) et un quatrième tambour (60), un premier poste (I) et un deuxième poste (II) situés à ladite première tourelle revolver (16) pour disposer ledit premier tambour (34) et ledit deuxième tambour (36) en position adjacente à des applicateurs de composants de bandages pneumatiques (122, 124), un troisième poste (III) et un quatrième poste (IV) situé à ladite deuxième tourelle revolver (18) pour disposer ledit troisième tambour (58) et ledit quatrième tambour (60) pour la réception d'une bande de carcasse depuis ladite unité de transfert (156) et d'autres composants de bandages pneumatiques, une troisième tourelle revolver (20) espacée d'une deuxième tourelle revolver (18) comprenant un sixième tambour (82) et un sixième tambour (84), un cinquième poste (V) et un sixième poste (VI) situés à ladite troisième tourelle revolver (20), une deuxième unité de transfert (170) disposée entre ladite troisième tourelle revolver (20) et ladite deuxième tourelle revolver (18), **caractérisé par** le fait de :
(a) positionner ledit premier tambour (34) dans ledit premier poste (I),
(b) appliquer un composant de bandage pneumatique du premier poste (I) sur ledit premier tambour (34),
(c) faire tourner ladite première tourelle revolver (16) pour amener ledit premier tambour (34) audit deuxième poste (II),
(d) appliquer un composant de bandage pneumatique sur ledit cinquième tambour (82) audit cinquième poste (V),
(e) appliquer un composant de bandage pneumatique du deuxième poste (II) sur ledit premier tambour (34) pour former une bande de bandage pneumatique (158),
(f) faire tourner ladite troisième tourelle revolver (20) pour déplacer ledit cinquième tambour (82) audit sixième poste (VI),
(g) faire tourner ladite première tourelle revolver (16) pour déplacer ledit premier tambour (34) et ladite bande de bandage pneumatique (158) en direction dudit premier poste (I),
(h) appliquer un autre composant de bandage pneumatique sur ledit cinquième tambour (82) pour obtenir un paquet de nappes de sommet,
(i) transférer ladite bande de bandage pneumatique (158) depuis ledit premier tambour (34) jusqu'audit troisième tambour (58) audit troisième poste (III) via ladite unité de transfert (156) et appliquer des talons sur ladite bande de bandage pneumatique (158),
(j) faire tourner ladite tourelle revolver (20) pour déplacer ledit cinquième tambour (82) en direction dudit cinquième poste (V),
(k) faire tourner ladite deuxième tourelle revolver (18) pour déplacer ledit troisième tambour (58) en direction dudit quatrième poste (IV),
(l) transférer ledit paquet de nappes de sommet de bande de roulement depuis ledit cinquième poste (V) jusqu'audit quatrième poste (IV) de ladite deuxième tourelle revolver (18) via ladite deuxième unité de transfert (170),
(m) faire tourner ladite deuxième tourelle revolver (18) pour déplacer ledit troisième tambour (58) depuis ledit quatrième poste (IV) jusqu'audit troisième poste (III), et
(n) retirer ladite carcasse de bandage pneumatique dudit troisième tambour (58) pour la transférer à des installations de stockage ou de vulcanisation.

2. Procédé selon la revendication 1, **caractérisé en outre par le fait que** lesdits composants de bandage pneumatique sont appliqués à partir des deux côtés dudit premier tambour (16) audit premier poste (I) et audit deuxième poste (II).

3. Procédé selon la revendication 1, **caractérisé en outre par le fait que** ledit troisième tambour (58) est soumis à une expansion pour façonner ladite bande de bandage pneumatique.

4. Procédé selon la revendication 1, **caractérisé en outre par** le fait d'appliquer un *deuxième* composant de bandage pneumatique du premier poste sur ledit premier tambour (34) dans ledit premier poste (I).

5. Procédé selon la revendication 4, **caractérisé en outre par** le fait d'appliquer un composant de bandage pneumatique du deuxième poste sur ledit premier tambour (34) dans ledit deuxième poste (I).

6. Procédé selon la revendication 5, **caractérisé en outre par** le fait d'appliquer ledit composant de bandage pneumatique du premier poste et ledit composant de bandage pneumatique du deuxième poste depuis les côtés opposés dudit premier tambour (34) dans ledit premier poste (I).

7. Procédé selon la revendication 5, **caractérisé en outre par** le fait d'appliquer ledit *premier* composant de bandage pneumatique du premier poste et ledit composant de bandage pneumatique du deuxième poste depuis les côtés opposés dudit premier tambour (34) dans ledit deuxième poste (II).

8. Procédé selon la revendication 1, **caractérisé par le fait que** ledit composant de bandage pneumatique appliqué sur ledit cinquième tambour (82) audit sixième poste (VI) est une bande de roulement de bandage pneumatique.

9. Procédé selon la revendication 8, dans lequel ladite bande de roulement de bandage pneumatique est une bande de roulement (176) moulée par injection, **caractérisé par** le fait de charger ladite bande de roulement dans un appareil de préhension et par le fait de transférer ladite bande de roulement 176 audit sixième poste (VI) à des fins d'application sur ledit cinquième tambour (82).

10. Procédé selon la revendication 8, dans lequel ladite bande de roulement de bandage pneumatique est une bande de roulement moulée par injection, **caractérisé par** le fait de retirer ladite bande de roulement directement d'un corps d'injection via un appareil de préhension (188) et par le fait de transférer ladite bande de roulement audit sixième poste (VI) à des fins d'application sur ledit cinquième tambour (82).

11. Appareil de confection de bandage pneumatique pour assembler plusieurs composants de bandage pneumatique associés dans le but de former une carcasse de bandage pneumatique, **caractérisé par**
(a) une première tourelle revolver (16), une deuxième tourelle revolver (18), et une troisième tourelle revolver (20), ladite première tourelle revolver (16) effectuant des rotations entre un premier poste (I) et un deuxième poste (II), ladite deuxième tourelle revolver (18) effectuant des rotations entre un troisième poste (III) et un quatrième poste (IV) et ladite troisième tourelle revolver (20) effectuant des rotations entre un cinquième poste (V) et un sixième poste (VI),
(b) chacune desdites tourelles revolvers (18, 19, 20) étant rotative autour d'un axe généralement horizontal, des arbres de tambours (26, 28, 50, 52, 74, 76) s'étendant à partir de chacune desdites tourelles revolvers dans des directions généralement opposées, des tambours (34, 36, 58, 60, 64, 82, 84) étant montés sur lesdits arbres de tambours (26, 28, 50, 52, 74, 76), lesdites tourelles revolvers et lesdits arbres de tambours étant disposés en alignement général les uns avec les autres le long d'un axe s'étendant entre lesdites tourelles revolvers (16, 18, 20);
(c) des moyens d'application de composants de bandages pneumatiques disposés en position adjacente auxdits tambours (34, 36) pour appliquer lesdits composants de bandages pneumatiques associés sur lesdits tambours dans le but de former une bande de carcasse de bandage pneumatique (158);
(d) des moyens d'application de composants de bandages pneumatiques disposés en position adjacente auxdits tambours (82, 84) pour appliquer lesdits composants de bandages pneumatiques associés sur lesdits tambours dans le but de former un paquet de nappes de sommet et de bande de roulement;
(e) une première unité de transfert (156) située entre lesdites première et deuxième tourelles revolvers (16, 18) pour transférer ladite bande de carcasse de bandage pneumatique (158) depuis un desdits tambours (34, 36) de ladite première tourelle revolver (16) jusqu'à un desdits tambours (58, 60) de ladite deuxième tourelle revolver (18);
(f) une deuxième unité de transfert (170) située entre lesdites deuxième et troisième tourelles revolvers (18, 20) pour transférer ledit paquet de nappes de sommet et de bande de roulement depuis un desdits tambours (82, 84) de ladite troisième tourelle revolver (20) jusqu'à un desdits tambours (58, 60) de ladite deuxième tourelle revolver (18); et
(g) un moyen de retrait de bandage pneumatique (180) pour retirer ladite carcasse de bandage pneumatique dudit appareil de confection de bandage pneumatique.

12. Appareil de confection de bandage pneumatique selon la revendication 11, **caractérisé en outre par le fait que** lesdits moyens d'application de composants de bandages pneumatiques comprennent des moyens pour appliquer un flanc et un calandrage intérieur sur un desdits tambours (34, 36) de ladite première tourelle revolver (16) et des moyens pour appliquer un protège bout de talon, une première nappe, une deuxième nappe et un coin sur un desdits tambours (34, 36) de ladite première tourelle revolver (16), ledit calandrage intérieur, ledit flanc, ledit protège bout de talon, ladite première nappe, ladite deuxième nappe et ledit coin formant ladite bande de carcasse de bandage pneumatique (158).

13. Appareil de confection de bandage pneumatique selon la revendication 12, **caractérisé en outre par le fait que** lesdits moyens d'application de composants de bandages pneumatiques comprennent des moyens pour appliquer des talons sur ladite bande de carcasse de bandage pneumatique (158).

14. Appareil de confection de bandage pneumatique selon la revendication 11, **caractérisé en outre par le fait que** lesdits moyens d'application de composants de bandages pneumatiques comprennent des moyens pour appliquer un calandrage intérieur et un flanc sur un desdits tambours (34, 36) audit premier poste (I) de ladite première tourelle revolver (16) et des moyens pour appliquer un protège bout de talon, une première nappe, une deuxième nappe et un coin sur un desdits tambours (34, 36) audit deuxième poste (II) de ladite première tourelle revolver (16), ledit calandrage intérieur, ledit flanc, ledit protège bout de talon, ladite première nappe, ladite deuxième nappe et ledit coin formant ladite bande de carcasse de bandage pneumatique (158).

15. Appareil de confection de bandage pneumatique selon la revendication 14, **caractérisé en outre par** des moyens pour appliquer des talons sur ladite bande de carcasse de bandage pneumatique.

16. Appareil de confection de bandage pneumatique selon la revendication 15, **caractérisé en outre par le fait que** lesdits moyens d'application de composants de bandages pneumatiques comprennent des moyens pour appliquer une nappe de sommet sur un desdits tambours (82, 84) audit cinquième poste (V) de ladite troisième tourelle revolver (20) et des moyens pour appliquer une bande de roulement sur un desdits tambours (82, 84) audit sixième poste (VI) de ladite troisième tourelle revolver (20).

17. Appareil de confection de bandage pneumatique selon la revendication 16, **caractérisé en outre par le fait que** lesdits moyens d'application de composants de bandages pneumatiques comprennent des moyens pour appliquer un recouvrement en spirale sur un des dix tambours (82, 84) audit sixième poste (VI) de ladite troisième tourelle revolver (20).
